# EUROPÄISCHE PATENTSCHRIFT

(11) **EP 3 696 496 B1**
(45) Veröffentlichungstag und Bekanntmachung des Hinweises auf die Patenterteilung: **29.12.2021**
(21) Anmeldenummer: 19157266.8
(22) Anmeldetag: 14.02.2019
(51) Int. Cl.: G01B 21/04

(54) **ÜBERPRÜFEN VON VERMESSUNGSPARAMETEREINSTELLUNGEN FÜR DEN BETRIEB EINES KOORDINATENMESSGERÄTS**
VERIFICATION OF MEASUREMENT PARAMETER SETTINGS FOR OPERATING A COORDINATE MEASURING DEVICE
VÉRIFICATION DES RÉGLAGES DE PARAMÈTRES DE MESURE POUR LE FONCTIONNEMENT D'UN APPAREIL DE MESURE DE COORDONNÉES

(43) Veröffentlichungstag der Anmeldung: 19.08.2020
(73) Patentinhaber: Carl Zeiss Industrielle Messtechnik GmbH, 73447 Oberkochen (DE)
(72) Erfinder: Willier, Philipp, 73432 Aalen (DE); Ramp, Michael, 73734 Esslingen (DE); Keller, Jürgen, 73434 Aalen (DE)
(74) Vertreter: Patentanwälte Bressel und Partner mbB

(56) Entgegenhaltungen:
- WO-A1-2016/169589
- DE-A1- 10 147 880

## Beschreibung

Die Erfindung betrifft ein Verfahren zum Überprüfen von Vermessungsparametereinstellungen für den Betrieb eines Koordinatenmessgeräts und eine Anordnung zur Werkstückvermessung. Insbesondere betrifft die Erfindung das Überprüfen von Einstellungen für wenigstens einen Vermessungsparameter eines Koordinatenmessgerätes, und zwar hinsichtlich der erreichbaren Messqualität und insbesondere hinsichtlich der Reproduzierbarkeit der Vermessungsergebnisse. Einstellungen des Vermessungsparameters können im Wesentlichen oder vollständig automatisch im Rahmen von Testmessungen überprüft und, falls sie eine gewünschte Reproduzierbarkeit der Vermessungsergebnisse ermöglichen, für das zukünftige Vermessen baugleicher Werkstücke verwendet werden.

Das Vermessen von Werkstücken mittels Koordinatenmessgeräten ist bekannt. Koordinatenmessgeräte dienen allgemein dazu, eine Oberfläche von Werkstücken taktil oder berührungslos zu erfassen und darauf basierend räumliche Positionen (d. h. Koordinaten) der erfassten Messpunkte an der Oberfläche zu bestimmen. Typischerweise wird hierbei eine sensorische Einheit zum Aufnehmen von Messsignalen durch das Koordinatenmessgerät relativ zu dem zu vermessenden Werkstück bewegt. Die sensorische Einheit kann zum Beispiel in Form eines taktilen Messtasters oder eines berührungslos erfassenden optischen Sensors realisiert sein.

Hinsichtlich des Begriffs Koordinatenmessgerät ist dieser erfindungsgemäß aber nicht auf Koordinatenmessgeräte z.B. in üblicher Portalbauweise beschränkt, sondern schließt insbesondere auch Geräte in Gantrybauweise, Horizontalarmgeräte und Gelenkarmgeräte mit ein. Auch können von dem Begriff optional Maschinen erfasst sein, die zwar nicht primär als Koordinatenmessgeräte konzipiert sind, die aber so eingerichtet sind, wie ein Koordinatenmessgerät zu arbeiten. Bekannt sind beispielsweise Roboterarme mit Drehgelenken, an denen anstelle eines Werkzeuges ein Sensor zur Erfassung der Werkstückoberfläche (beispielsweise ein Streifenprojektionssensor) befestigt ist, oder Werkzeugmaschinen, an denen anstelle eines Bearbeitungswerkzeuges ein Sensor zur Erfassung der Werkstückoberfläche (beispielsweise ein taktiler Sensor) befestigt ist. Auch sind beispielsweise Hexapodenmechaniken bekannt, an denen anstelle eines Bearbeitungswerkzeuges ein Sensor zur Erfassung der Werkstückoberfläche (beispielsweise ein taktiler Sensor) befestigt ist. Ferner fällt unter den Begriff Koordinatenmessgerät zum Beispiel auch ein Gerät, das durch tomografische Verfahren invasive Strahlung auf das Werkstück einstrahlt und zum Beispiel Durchstrahlungsbilder und/oder Reflexionsbilder (englisch: radiographs) aufnimmt. Insbesondere kann aus mehreren solcher Bilder durch Rekonstruktionsverfahren ein dreidimensionales Bild des Werkstücks erzeugt werden, aus dem wiederum Werte sogenannter Prüfmerkmale bestimmt werden können. Ferner können auch nicht per Roboter geführte Streifenprojektionssensoren ein Koordinatenmessgerät bilden oder Bestandteil hiervon sein, bspw. wenn diese in üblicher Weise eine dreidimensionale Werkstückform durch Erfassen von Oberflächenkoordinaten ermöglichen. Die Erfindung richtet sich prinzipiell auf jegliche der oben genannten Varianten und kann entsprechend auch auf jede dieser Varianten beschränkt werden, insbesondere auf Koordinatenmessgeräte umfassend eine Anordnung von Linearachsen (zum Beispiel drei orthogonal zueinander ausgerichtete Linearachsen), wie nachstehend an einem Ausführungsbeispiel erläutert.

Je nach dem zu vermessenden Werkstück und der konkreten Messaufgabe können verschiedene Betriebsparameter des Koordinatenmessgeräts gezielt eingestellt werden. Nach Maßgabe der Betriebsparameter wird dann die Werkstückvermessung durchgeführt, weshalb diese im Folgenden als Vermessungsparameter bezeichnet werden. Beispiele für derartige Vermessungsparameter sind z.B. eine Messgeschwindigkeit, eine Messkraft oder ein Suchweg.

Um geeignete Einstellungen für die Vermessungsparameter eines Koordinatenmessgeräts zu wählen, muss ein Anwender bisher auf Erfahrungswerte, Richtlinien oder Normen zurückgreifen. Ferner existieren Softwarelösungen in Form von Expertensystemen, welche zum Beispiel in Kenntnis des zu vermessenden Werkstücks und dem verwendeten Koordinatenmessgerät Empfehlungen hinsichtlich geeigneter Vermessungsparametereinstellungen geben können.

Unter der Einstellung eines Vermessungsparameters kann im Rahmen dieser Offenbarung allgemein das Festlegen eines Wertes für einen Vermessungsparameter verstanden werden und/oder das Einstellen einer aus mehreren Einstellmöglichkeiten des Vermessungsparameters, wie zum Beispiel durch das Auswählen von einer aus mehreren Lichtquellen. In letzterem Fall ist die verwendete Lichtquelle der Vermessungsparameter.

Als Einstellmöglichkeiten können auch (Einstell-) Stufen des Vermessungsparameters bereitgestellt sein.

Mit den bekannten Ansätzen gelingt es bisher nicht immer oder zumindest nicht ausreichend zuverlässig und/oder mit akzeptablem Aufwand, Einstellungen der Vermessungsparameter zu ermitteln, mit denen eine zufriedenstellende Werkstückvermessung gelingt.

Die WO 2016/169589 A1 offenbart Lösungen zum Bestimmen von dimensionellen Ist-Eigenschaften eines Messobjekts, wobei zunächst ein erster Messablauf erstellt wird, der vor Aufnahme individueller Messwerte modifiziert wird, um einen zweiten Messablauf zu erhalten, mit dem eine definierte Messunsicherheit erzielbar ist.

Die DE 101 47 880 A1 offenbart ein Verfahren zur Messung einer charakteristischen Dimension wenigstens einer Struktur auf einem scheibenförmigen Objekt in einem Messgerät, wobei das Messgerät ein optisches Mikroskop oder ein Rasterelektronenmikroskop ist.

Eine Aufgabe der vorliegenden Erfindung ist daher, das Einstellen von Vermessungsparametern für die Werkstückvermessung zu verbessern.

Diese Aufgabe wird durch ein Verfahren und eine Anordnung gemäß den beigefügten unabhängigen Ansprüchen gelöst. Vorteilhafte Weiterbildungen sind in den abhängigen Ansprüchen angegeben. Ferner versteht es sich, dass die in der einleitenden Beschreibung erwähnten Merkmale einzeln oder in beliebiger Kombination auch bei der vorliegend offenbarten Lösung vorgesehen sein können, sofern nicht anders angegeben oder ersichtlich. Dies betrifft insbesondere die verschiedenen Varianten von Koordinatenmessgeräten, sowie die allgemeinen Ausführungen zu Vermessungsparametern und dem Einstellen hiervon.

Ein Gedanke der Erfindung richtet sich darauf, mehrere Werkstückvermessungen bei derselben Einstellung des Vermessungsparameters durchzuführen. Anschließend können anhand der Gesamtheit der bei einer jeweiligen Messung gewonnenen Messergebnisse Rückschlüsse darauf gezogen werden, ob mit der gewählten Einstellung des Vermessungsparameters ein gewünschtes Resultat erzielt wird. Insbesondere kann eine Größe ermittelt werden, die eine Reproduzierbarkeit der Messergebnisse beschreibt. Zusätzlich kann eine Messgeschwindigkeit, eine Messdauer und/oder eine Absolutgenauigkeit der Messergebnisse betrachtet werden. Darauf basierend kann dann bestimmt werden, ob eine gewählte Einstellung des Vermessungsparameters für das Vermessen baugleicher Werkstücke geeignet ist oder nicht.

Gemäß erfindungsgemäßen Ausführungsformen des Verfahrens und der Anordnung werden die geschilderten Maßnahmen automatisiert ausgeführt, beispielsweise nachdem ein Bediener das zu vermessende Werkstück in einen Messbereich des Koordinatenmessgeräts eingebracht hat.

Im Ergebnis kann somit eine zuverlässige Aussage getroffen werden, ob eine gewählte Einstellung des Vermessungsparameters geeignet ist und insbesondere eine ausreichende Reproduzierbarkeit ermöglicht. Dies gilt insbesondere Vergleich zu dem bisher vergleichsweise groben Abschätzen möglicherweise geeigneter Einstellungen anhand von Erfahrungswerten oder mithilfe von Expertensystemen. Insbesondere wenn das Verfahren bzw. ein Betrieb der Anordnung automatisiert durchgeführt wird, ist der aus Sicht des Bedieners erforderliche Aufwand zum Ermitteln geeigneter Einstellungen reduziert. Beispielsweise müssen nicht iterative Testmessungen manuell durchgeführt werden und/oder geeignete Einstellungen des mindestens einen Vermessungsparameters in Normen oder Expertensystemen nachgeschlagen werden.

Zusammengefasst kann die Erfindung ermöglichen, dass zum Beispiel nach einem Eingeben oder Einlesen von Werkstückinformationen automatisiert geeignete Einstellungen von wenigstens einem Vermessungsparameter ermittelt werden, ohne dass der Bediener umfangreiche eigene Handlungen oder Recherchen anstellen muss.

Wurde zumindest eine geeignete Einstellung ermittelt, wird diese vorteilhafterweise zum Vermessen weiterer, vorzugsweiser baugleicher Werkstücke verwendet. Letzteres ist insbesondere im Rahmen einer Serienfertigung vorteilhaft, bei der sämtliche gefertigten Werkstücke der Serie oder zumindest eine Mehrzahl baugleicher Werkstücke vermessen werden sollen. In diesem Fall ist die beschriebene Lösung hilfreich, um für diese Messaufgabe vorab geeignete Einstellungen des wenigstens einen Vermessungsparameters zu ermitteln und anschließend die Mehrzahl von Werkstücken mittels dieser Einstellung zu vermessen.

Im Detail wird ein Verfahren zum Überprüfen von Vermessungsparametereinstellungen (hinsichtlich der hiermit erzielbaren Reproduzierbarkeit von Vermessungsergebnissen) für den Betrieb eines Koordinatenmessgeräts vorgeschlagen,
wobei das Koordinatenmessgerät dazu eingerichtet ist, ein Werkstück nach Maßgabe wenigstens eines einstellbaren Vermessungsparameters zu vermessen,
und wobei das Verfahren automatisiert durchgeführt wird und umfasst:
   a) mehrfaches Vermessen eines Werkstücks mit dem Koordinatenmessgerät und mit einer festgelegten Einstellung des Vermessungsparameters (zum Beispiel ein mindestens fünfmaliges, mindestens zehnmaliges oder mindestens zwanzigmaliges Vermessen), wobei räumliche Koordinaten von Messpunkten an der Werkstückoberfläche bestimmt werden;
   b) Berechnen eines Werts einer Größe, die eine Reproduzierbarkeit von mit den Vermessungen aus a) ermittelten Vermessungsergebnissen beschreibt;
   c) Verändern der Einstellung des Vermessungsparameters und erneutes Durchführen von a) und b).

Der Wert der (Bewertungs-) Größe basiert daher auf den Ergebnissen des mehrfachen Vermessens des Werkstücks. Zum Beispiel wird durch jedes Vermessen in a) genau ein Vermessungsergebnis erhalten. Es ist aber auch möglich, dass durch jedes Vermessen mehr als ein Vermessungsergebnis erhalten wird, z.B. je ein Wert von einer Mehrzahl von Messgrößen. In diesem Fall kann die Bewertungs-Größe die Reproduzierbarkeit bei der Bestimmung von einer Mehrzahl von Messgrößen beschreiben.

Das Koordinatenmessgerät kann gemäß jeglicher einleitend geschilderter Bauart ausgebildet sein und allgemein für eine taktile oder berührungslose Werkstückvermessung eingerichtet sein.

Bei dem Werkstück kann es sich um ein industriell gefertigtes Werkstück handeln. Das Werkstück kann fertig bearbeitet sein und/oder sich in einem montagefähigen Zustand befinden, beispielsweise wenn es in eine Baugruppe aus mehreren Werkstücken eingebaut werden soll. Das Werkstück kann sich jedoch auch in einem noch nicht vollständig bearbeiteten Zustand befinden. Insbesondere in letzterem Fall kann das Vermessen dazu dienen, die Qualität bereits erfolgter Bearbeitungsschritte zu überprüfen oder aber Eigenschaften noch durchzuführender Bearbeitungsschritte basierend auf dem Messergebnis festzulegen.

Wie erwähnt, kann das Einstellen des Vermessungsparameters das Festlegen eines Wertes oder einer Stufe umfassen oder allgemein das Auswählen einer von mehreren Einstellmöglichkeiten für den Vermessungsparameter.

Das Verfahren kann allgemein dazu dienen, geeignete Vermessungsparametereinstellung für Werkstücke einer bestimmten Bauart oder eines bestimmten Typs zu ermitteln. Hierfür kann das Verfahren zunächst auf ein Werkstück angewandt werden, dessen Eigenschaften vorzugsweise bekannt sind und/oder das mit einer ausreichenden und gewünschten Genauigkeit gefertigt wurde. Zusätzlich oder alternativ kann das Werkstück repräsentativ für die betrachtete Bauart bzw. den betrachteten Typ sein. Beispielsweise kann dieses Werkstück sämtliche vorgeschrieben Toleranzen für ein zu vermessendes Prüfmerkmal (siehe unten) einhalten. Die Vermessungsparametereinstellungen, die anhand dieses bevorzugten und/oder besonders genauen Werkstücks ermittelt wurden, können anschließend zum Vermessen weiterer vergleichbarer Werkstücke verwendet werden. Das zuerst vermessene und besonders genaue und/oder repräsentative Werkstück kann auch als Prüfkörper, Prüfwerkstück oder Meisterteil bezeichnet werden.

Ein Vorteil dieser Variante besteht darin, dass etwaige Messungenauigkeiten aufgrund der bevorzugten Eigenschaften des Werkstücks im Wesentlichen oder ausschließlich auf die Vermessungsparametereinstellungen zurückgeführt werden können. Anders ausgedrückt kann mit einer hohen Wahrscheinlichkeit darauf geschlossen werden, dass die Wahl bestimmter Vermessungsparametereinstellungen ungeeignet ist, wenn die Messergebnisse eine unzureichende Genauigkeit aufweisen oder anzeigen (beispielsweise ein Nichteinhalten von Toleranzen anzeigen, obwohl das Werkstück mit der entsprechenden Genauigkeit gefertigt wurde).

Durch Verwenden eines solchen genauen und/oder repräsentativen Werkstücks ist ferner die Übertragbarkeit auf andere baugleiche Werkstücke gewährleistet. Alternativ oder zusätzlich kann, wie nachstehend erläutert, mittels eines solchen Werkstücks die mit einer gewählten Einstellung erzielbare (absolute) Messgenauigkeit ermittelt und zum Beispiel beim Auswählen geeigneter Einstellungen für weitere Werkstückvermessungen berücksichtigt werden.

Das Verfahren wird allgemein automatisiert ausgeführt. Unter dem Begriff "automatisiert" kann ein ohne zwingend erforderliche Benutzereingaben, Benutzereingriffe oder allgemein manuell Betätigungen ablaufender Betrieb des Koordinatenmessgeräts bzw. der nachstehend geschilderten Anordnung verstanden werden. Stattdessen kann das Koordinatenmessgerät (bzw. die Anordnung) durch Abarbeiten von Programmanweisungen automatisiert und benutzerunabhängig betrieben werden, wobei die Programmanweisungen die hierin geschilderten Schritte und Maßnahmen definieren können.

Ein Benutzer kann allgemein ein Bediener des Koordinatenmessgeräts sein, der zum Beispiel damit beauftragt ist, einen sogenannten Prüfplan für das zu vermessende Werkstück zu erstellen. Letzteres kann das Definieren geeigneter Einstellungen für die Vermessungsparameter voraussetzen. Diese Einstellungen können erfindungsgemäß automatisiert ermittelt werden, was bei einem möglicherweise sogar geringeren manuellen Aufwand dennoch zuverlässiger ist, als wie bisher anhand von Erfahrungswerten oder Testmessungen geeignete Einstellungen lediglich grob abzuschätzen.

Sämtliche Maßnahmen a) bis c) aber auch zumindest ausgewählte oder sämtliche der nachfolgend erläuterten weiteren Schritte und Maßnahmen können folglich von einer Steuereinrichtung ausgeführt oder veranlasst werden. Die Steuereinrichtung kann allgemein elektronisch und/oder digital betreibbar sein. Gesonderte Benutzereingaben oder -bedienungen können nicht erforderlich sein, erfindungsgemäß aber ebenso erfolgen oder ermöglicht werden, zum Beispiel im Rahmen der Maßnahme a). In letzterem Fall kann zumindest eine initiale Einstellung des Vermessungsparameters von einem Benutzer vorgegeben werden. Auch kann ein Benutzer Entscheidungsregeln oder vergleichbare Vorgaben definieren, gemäß derer in Schritt c) eine Variation der Einstellung erfolgt. Die Variation an sich kann dann aber automatisiert (d. h. beutzerunabhängig und insbesondere ohne manuelle Eingaben oder Betätigungen) durchgeführt werden. Weitere Beispiele für vom Benutzer festlegbare Merkmale werden im Zusammenhang mit dem Ausführungsbeispiel geschildert, können aber unabhängig von den Details dieses Ausführungsbeispiels beansprucht werden.

Gemäß einer Variante werden basierend auf Werkstückinformationen (zum Beispiel in Form von CAD-Daten) sämtliche Verfahrensschritte automatisiert ausgeführt. Die Werkstückinformationen können dazu verwendet werden, um eine geeignete initiale Einstellung aber auch das Ausmaß der anschließenden Veränderung in Schritt c) zu bestimmen. Dies kann erneut mittels einer Steuereinrichtung erfolgen. Das Verfahren kann dann automatisiert ablaufen. Allgemein kann als ein Ergebnis für jede der Einstellungen die die Reproduzierbarkeit beschreibende Größe ermittelt werden und beispielsweise angezeigt oder ausgegeben werden. Wie nachstehend erläutert, kann zusätzlich oder alternativ als ein Ergebnis eine geeignete Einstellung ermittelt (und beispielsweise angezeigt oder ausgegeben) werden. Letzteres kann auf Basis eines Vergleichs der die Reproduzierbarkeit beschreibenden Größe der einzelnen Einstellungen durchgeführt werden.

Das automatisierte Ausführen der Maßnahmen kann zum Beispiel ein automatisiertes Vermessen und/oder Berechnen gemäß den Maßnahmen a) und b) umfassen, wofür Berechnungen und/oder Auswertungen auf Basis hinterlegter Programmanweisungen ausgeführt werden können. Das Festlegen von Vermessungsparametereinstellungen gemäß der Maßnahme a) und/oder deren Variation gemäß Maßnahme c) kann per manueller Eingabe oder automatisch und dann insbesondere nach Maßgabe von Entscheidungsregeln erfolgen, die wiederum in Form von Programmanweisungen hinterlegt sein können. Beispielsweise kann hierfür eine (digitale) Wertetabelle bereitgestellt sein, aus der geeignete Einstellungen ausgelesen werden. Diese Veränderungen können allgemein basierend auf Informationen über das zu vermessende Werkstück (zum Beispiel dessen Größe und/oder Oberflächenbeschaffenheit) festgelegt werden.

Im Rahmen der Maßnahme b) kann ein allgemein automatisierter Vermessungsbetrieb des Koordinatenmessgeräts ausgeführt werden, wie er bei bestehenden Koordinatenmessgeräten üblich ist.

Sofern nicht anders angegeben oder ersichtlich, ist das Auflisten der Verfahrensmaßnahmen a)-c) nicht als Definition einer zwingenden zeitlichen Reihenfolge zu verstehen. Zumindest die Maßnahmen b) und c) können beispielsweise wenigstens teilweise parallel oder zeitlich überlappend ausgeführt werden. Auch können die Maßnahmen a) und c) zunächst vollständig durchgeführt und kann erst anschließend die Größenermittlung gemäß b) vorgenommen werden.

Bei dem Vermessungsparameter kann es sich insbesondere um einen der folgenden handeln, wobei nachstehend erwähnte Ungenauigkeiten in entsprechend geringen Reproduzierbarkeit resultieren:
- Eine Messgeschwindigkeit: Hierunter kann zum Beispiel die Relativgeschwindigkeit zwischen einem Werkstück und einer sensorischen Einheit (zum Beispiel einem Messtaster) des Koordinatenmessgeräts verstanden werden. Auch eine berührungslose Messgeschwindigkeit durch Bewegen einer optischen sensorischen Einheit und/oder eines etwaigen optischen Erfassungsfeldes hiervon relativ zu einem Werkstück kann betrachtet werden. Die Messgeschwindigkeit kann auch als (taktile oder berührungslose) Abtastgeschwindigkeit bezeichnet werden. Allgemein ermöglichen hohe Messgeschwindigkeiten einen hohen Durchsatz bei der seriellen Werkstückvermessung, wobei der Durchsatz die Anzahl von vermessbaren Werkstücken pro Zeiteinheit ist, bedingen hierdurch aber auch ein größeres Risiko von Ungenauigkeiten. Als Einstellung kann z.B. ein Wert der Messgeschwindigkeit festgelegt werden.

- Eine Stillstandszeit (zum Beispiel resultierend aus dem Anhalten an Synchronisationspunkten): Eine Stillstandszeit kann in bekannter Weise dann auftreten, wenn bei einem Abfahren einer bestimmten Messpunktreihenfolge entlang einer Werkstückoberfläche an sogenannten Synchronisationspunkten bewusst angehalten wird, um eine aktuelle Position des Koordinatenmessgeräts und/oder von dessen sensorischer Einheit auszulesen. Allgemein ermöglichen geringe Stillstandszeit einen hohen Durchsatz, bedingen hierdurch aber auch ein größeres Risiko von Ungenauigkeiten. Als Einstellung kann z.B. ein Wert der Stillstandszeit festgelegt werden.
- Eine Antastgeschwindigkeit: Die Antastgeschwindigkeit betrifft die Geschwindigkeit, mit der eine sensorische Einheit und insbesondere ein Messtaster sich einem vorbestimmten Messpunkt bzw. Abtastpunkt nähert. Allgemein ermöglichen hohe Antastgeschwindigkeiten einen hohen Durchsatz, bedingen hierdurch aber auch ein größeres Risiko von Ungenauigkeiten. Als Einstellung kann z.B. ein Wert der Antastgeschwindigkeit festgelegt werden.
- Eine Messkraft: Die Messkraft betrifft die Kraft, mit der eine sensorische Einheit des Koordinatenmessgeräts und insbesondere ein Messtaster an dem zu vermessenden Werkstück anliegt oder, anders ausgedrückt, sich an dem Werkstück abstützt. Je nach dem Material des zu vermessenden Werkstücks können geringe Messkräfte bevorzugt sein, zum Beispiel um Beschädigungen einer vergleichsweise weichen Werkstückoberfläche (bzw. ein Hängenbleiben eines Messtasters darin) zu vermeiden und allgemein die Messgenauigkeit zu erhöhen. Allerdings können geringe Messkräfte die anwendbare Messgeschwindigkeit begrenzen, da z.B. die Gefahr des Abhebens eines Messtasters von der Werkstückoberfläche besteht. Somit kann sich die Messkraft je nach der aktuellen Messaufgabe vor allem auf die Genauigkeit aber auch zumindest mittelbar auf die anwendbare Messgeschwindigkeit und somit den erzielbaren Durchsatz auswirken. Als Einstellung kann z.B. ein Wert der Messkraft festgelegt werden.
- Eine Beschleunigung: Beschleunigungen im Rahmen des Abtast- bzw. Messvorgangs sind insbesondere in Form anfänglicher Beschleunigungen relevant, mit denen die für ein Vermessen ausgeführte Relativbewegung (oder auch Abtastbewegung) zwischen der sensorischen Einheit und dem Werkstück in Gang gesetzt wird. Allgemein ermöglichen hohen Beschleunigungen einen hohen Durchsatz, bedingen hierdurch aber auch ein größeres Risiko von Ungenauigkeiten, insbesondere zu Beginn eines Messvorgangs. Als Einstellung kann z.B. ein Wert der Beschleunigung festgelegt werden.
- Eine Beleuchtungsart (Lichtquelle): Insbesondere für die optische Werkstückvermessung können verschiedene Beleuchtungsarten vorgesehen sein, die je nach Messaufgabe ausgewählt werden können. Die Beleuchtungsarten können insbesondere durch das Verwenden verschiedener Lichtquellen bereitgestellt werden, beispielsweise durch Verwenden von einem Durchlicht, Miniringlicht oder Ringlicht. Je nach zu vermessenden Werkstück können sich andere Lichtquellen als geeignet erweisen, beispielsweise um ein Ausmaß von Reflektionen durch das Werkstück zu begrenzen. Als Einstellung kann zum Beispiel die verwendete Lichtquelle festgelegt werden.
- Eine Beleuchtungsstärke: Hierüber kann die Lichtintensität, die zum Beispiel bei ein optisches Vermessen verwendet wird, eingestellt werden. Die Beleuchtungsstärke bzw. Lichtintensität kann in Form der Lichtstärke definiert sein. Erneut können je nach zu vermessendem Werkstück und insbesondere nach Maßgabe von dessen Reflektionseigenschaften unterschiedliche Lichtstärken geeignet sein. Als Einstellung kann die Beleuchtungsstärke in Form einer Stufeneinstellung oder als ein Wert der gewünschten Lichtstärke festgelegt werden.
- Eine Fokussierung: Hierüber kann eine Fokuseinstellung, die zum Beispiel für ein optisches Vermessen erforderlich ist, eingestellt werden. In an sich bekannter Weise kann hierüber z.B. eine Lage der Fokusebene definiert werden. Als Einstellung kann die Fokussierung in Form einer Stufeneinstellung oder als ein Wert der gewünschten Fokuslage (zum Beispiel in Form des Werts einer Objektivbrennweite) festgelegt werden.

Weitere Vermessungsparameter für taktile als auch optische Vermessungen sind die zulässige Größe von Ausreißern (zum Beispiel bei einem scannenden Messvorgang auftretende Ausreißer, die durch Verschmutzungen des Werkstücks verursacht sein können) und eine sogenannte Filtergröße, die dazu verwendet wird, unterschiedliche Tastergrößen zu berücksichtigen. Über die Anzahl der Antastpunkte kann hingegen sowohl die Genauigkeit (je höher, desto genauer) als auch die Messdauer beeinflusst werden (je mehr Antastpunkte, desto länger die Messdauer). Für sämtliche dieser weiteren Beispiele kann als Einstellung z.B. ein Wert des entsprechenden Vermessungsparameters vorgegeben werden.

Für optische Vermessungen existieren ferner die folgenden Vermessungsparameter: Zoom, Beleuchtung (Auflicht / Dunkelfeld / Hellfeld / Durchlicht), Beleuchtungsfarbe, Beleuchtungsintensität, Grauwertfestlegung, Frequenz (insbesondere Abtastfrequenz bei chromatisch- konfokalen Sensoren) und die Größe des ROI (Region of Interest). Für jeden dieser weiteren optischen Vermessungsparameter können als Einstellungen wiederum Werte und/oder Stufeneinstellungen wählbar sein.

Prinzipiell kann die Erfindung auch für bzw. mit anderen Vermessungsparametern angewandt werden. Insbesondere können die Vermessungsparameter jeglichen Betriebsparameter eines Koordinatenmessgeräts betreffen, welcher für das Vermessen von einem Werkstück wählbar und/oder veränderbar (d. h. allgemein einstellbar) ist. Zusätzlich oder alternativ können sämtliche Betriebsparameter eines Koordinatenmessgeräts als Vermessungsparameter eingestellt werden, welche sich prinzipiell auf die Reproduzierbarkeit auswirken können.

Allgemein kann die Werkstückvermessung das Vermessen von wenigstens einem Prüfelement und/oder Prüfmerkmal eines Werkstücks umfassen. Es muss also nicht das komplette Werkstück in Schritt b) vermessen werden. Vielmehr kann dieses lediglich lokal beziehungsweise abschnittsweise vermessen werden und vorzugsweise hinsichtlich wenigstens eines vorbestimmten Prüfmerkmals. Allgemein kann die Werkstückvermessung das Ermitteln von (vorzugsweise einer Mehrzahl von) Werkstückkoordinaten umfassen, insbesondere im Bereich von bzw. bezogen auf ein entsprechendes Prüfmerkmal. Anhand der Koordinaten kann dann zum Beispiel ein Wert des Prüfmerkmals bestimmt werden.

Unter einem Prüfmerkmal wird gemäß herkömmlicher Definitionen, die auch auf den vorliegenden Fall zutreffen, ein zu überprüfendes oder zu vermessendes Merkmal und insbesondere ein geometrisches Merkmal (oder eine geometrische Eigenschaft) des Werkstücks verstanden. Beispiele für ein Prüfmerkmal sind die Rundheit eines Werkstückbereichs, die Parallelität zwischen zwei Werkstückflächen, die Ebenheit oder Rauheit der Werkstückoberfläche oder die Formabweichung eines Werkstückbereichs (zum Beispiel von einer vorgegebenen Form wie einem Kreis). Anhand der bei der Werkstückvermessung ermittelten Koordinaten kann als Vermessungsergebnis somit der Wert eines entsprechenden Prüfmerkmals hergeleitet oder ermittelt werden.

Ein Prüfelement betrifft hingegen denjenigen Bereich oder dasjenige geometrische Element des Werkstücks, der bzw. das hinsichtlich seiner Eigenschaften und insbesondere hinsichtlich zumindest einem Prüfmerkmal überprüft werden soll. Beispiele für ein Prüfelement sind zum Beispiel eine Durchmesserstufe, eine Kante oder eine Bohrung.

Für eine Einstellung des wenigstens einen Vermessungsparameters (oder auch einen Satz von Vermessungsparametern mit jeweils festgelegten Einstellungen) können somit mehrere Wiederholungen gemäß Schritt b) durchgeführt und ein bei jeder Wiederholung erhaltener (Mess-) Wert eines Prüfmerkmals kann aufgezeichnet bzw. abgespeichert werden. Anschließend liegt somit eine Mehrzahl von Werten des Prüfmerkmals vor, die im Rahmen des mehrfachen Vermessens (also der Wiederholungen gemäß Schritt b)) ermittelt wurden. Dies erhöht die Aussagekraft im Vergleich zu dem theoretischen Fall, dass eine Vermessungsparametereinstellung lediglich anhand eines einzelnen Messvorgangs bewertet wird.

Als die Reproduzierbarkeit beschreibende Größe (Reproduzierbarkeits-Größe) kann allgemein eine (insbesondere statistische) Größe ermittelt werden, die anhand der Mehrzahl von Vermessungsergebnissen für die einzelnen Wiederholungen aus Schritt a) bestimmt wird. Wie geschildert, können diese Vermessungsergebnisse insbesondere jeweils einen Wert für wenigstens ein Prüfmerkmal umfassen oder ein solcher Wert sein. Unter einer statistischen Größe kann jegliche Größe verstanden werden, die aus bzw. anhand der Mehrzahl von Vermessungsergebnissen und/oder Prüfmerkmals-Werten ermittelbar ist. Beispielsweise kann es sich bei der Reproduzierbarkeit-Größe um eine Differenz zwischen dem Minimal- und Maximalwert der Vermessungsergebnisse und/oder Prüfmerkmals-Werten handeln (d. h. um die Spannweite). Ebenso kommt ein Mittelwert, die Standardabweichung, ein Median oder ein häufigster Wert (Modus) in Betracht. Die die Reproduzierbarkeit beschreibende Größe kann allgemein ein Ausmaß der Reproduzierbarkeit beschreiben.

Zusammengefasst kann die Größe zum Beschreiben der Reproduzierbarkeit einen Wert hinsichtlich der Variation, Unterschiede, Bandbreite an Vermessungsergebnissen angeben oder allgemein eine (insbesondere statistische) Größe sein, welche die mit einer jeweiligen Einstellung erhaltene Menge (bzw. Verteilung) von Vermessungsergebnissen beschreibt.

Unter der Reproduzierbarkeit kann allgemein eine Wiederholbarkeit oder auch Replizierbarkeit verstanden werden. Beispielsweise sollte bei einer optimalen oder, mit anderen Worten, vollständigen Reproduzierbarkeit stets das gleiche Ergebnis bei den Werkstückvermessungen aus Schritt b) erhalten werden. Je größer die Abweichungen der Vermessungsergebnisse sind, die zwischen den einzelnen Wiederholungen gemäß Schritt b) vorliegen, desto geringer ist die Reproduzierbarkeit (und umgekehrt).

Wie vorstehend angedeutet, sieht eine Weiterbildung des Verfahrens und der Anordnung vor, dass für jede Vermessung aus a) ein Wert von wenigstens einem Prüfmerkmal ermittelt wird. Dieser Wert ist vorzugsweise das Vermessungsergebnis für eine jeweilige Vermessung bzw. Wiederholung in Schritt a). In diesem Zusammenhang kann ferner vorgesehen sein, dass die die Reproduzierbarkeit beschreibende Größe anhand der (Mehrzahl von) ermittelten Werten des Prüfmerkmals ermittelt wird.

Eine Weiterbildung des Verfahrens und der Anordnung sieht vor, dass die Maßnahme c) Rahmen des Verfahrens wenigstens zweimal durchgeführt wird. Hierdurch wird die Variationsbreite der Einstellungen erhöht oder, mit anderen Worten, die Anzahl der unterschiedlichen Einstellungen. Dies erhöht die Wahrscheinlichkeit, dass eine tatsächlich geeignete bzw. nahe am Optimum liegende Einstellung geprüft und/oder als geeignet identifiziert wird. Eine jede Durchführung von c) zieht ein entsprechend erneutes Durchführen von a) und b) mit entsprechend veränderter Vermessungsparametereinstellung mit sich.

Gemäß dem grundlegenden Erfindungsgedanken sind also wenigstens zwei Durchführungen (oder mit anderen Worten Zyklen) von a) und b) vorgesehen und gemäß der vorliegenden Ausführungsform wenigstens drei Durchführungen von a) und b), wobei sich jede Durchführung durch von den anderen Durchführungen verschiedene Vermessungsparametereinstellungen auszeichnet.

Wie vorstehend bereits angedeutet, erfolgt erfindungsgemäß eine automatisierte Durchführung der geschilderten Maßnahmen bzw. des geschilderten Verfahrens. Insbesondere wird die erfindungsgemäße Anordnung automatisiert betrieben.

Gemäß einer weiteren Ausführungsform des Verfahrens und der Anordnung wird ein Messdauerwert für das Vermessen des Werkstücks mit einer jeweiligen Einstellung das Vermessungsparameters ermittelt. Hierfür kann je Vermessungsvorgang in Schritt b) (also für jede Wiederholung) die jeweils erforderliche Mess(zeit)dauer ermittelt und insbesondere gemessen werden. Anschließend kann als Messdauerwert für diese festgelegte Einstellung ein Maximalwert, ein Minimalwert, ein Mittelwert, ein Median oder ein Modus (häufigster Wert) aus den bzw. anhand der ermittelten Messdauern bestimmt werden. Der Messdauerwert kann neben der Reproduzierbarkeit als zusätzliche Entscheidungshilfe zur Auswahl geeigneter Vermessungsparametereinstellungen dienen.

Eine Weiterbildung des Verfahrens und der Anordnung sieht vor, dass eine Messgenauigkeit für das Vermessen des Werkstücks mit einer jeweiligen Einstellung des Vermessungsparameters ermittelt wird, oder, anders ausgedrückt, die Messgenauigkeit, die mit einer jeweils festgelegten Einstellung erzielbar ist. Insbesondere kann für jede festgelegte Einstellung und auf Basis der hiermit gewonnenen Vermessungsergebnisse (insbesondere Prüfmerkmalswerte) ein die Messgenauigkeit beschreibender Wert ermittelt werden. Dieser kann z.B. eine Abweichung von einem erwarteten Soll-Vermessungsergebnis und insbesondere einem Soll-Prüfmerkmalswert angeben (z.B. eine Differenz hierzu). Die Messgenauigkeit kann allgemein eine absolute Messgenauigkeit sein.

Zum Ermitteln der Messgenauigkeit kann als Werkstück ein bereits vorstehend erwähntes Master- oder Meisterteil vermessen werden. Dieses kann hinsichtlich zu vermessender Bereiche und insbesondere zumindest für ein betrachtetes Prüfmerkmal bekannte Eigenschaften und/oder Abmessungen aufweisen, insbesondere die vorstehend genannten Soll-Ergebnisse bzw. -Werte. Insbesondere kann es für diese Bereiche und/oder Prüfmerkmale sämtliche vorgeschriebenen Toleranzen erfüllen. Wird beim Vermessen eines solchen Werkstücks eine Abweichung zu den erwarteten Soll-Ergebnissen bzw. -Werten festgestellt, kann dies zum Beziffern der Messgenauigkeit verwendet werden (je größer die Abweichung, desto geringer die Messgenauigkeit).

Allgemein kann die Messgenauigkeit also nach Maßgabe oder, anders ausgedrückt, in Abhängigkeit von Abweichungen zu erwarteten Soll-Ergebnissen bzw. -Werten ermittelt werden.

Weiter kann vorgesehen sein, dass anhand der die Reproduzierbarkeit beschreibenden Größe eine Einstellung des wenigstens einen Vermessungsparameters für das Vermessen weiterer Werkstücke ermittelt wird, insbesondere in Form einer Empfehlung. Die ermittelte Einstellung kann zum Beispiel auf Basis vorab hinterlegter (zum Beispiel ab Werk hinterlegter) oder von einem Benutzer programmierbaren Entscheidungsregeln und/oder vom Benutzer gewählter Gewichtungen ermittelt werden. Insbesondere können bei dem Ermitteln der geeigneten Einstellung neben der Reproduzierbarkeits-Größe auch optional ermittelte Messdauerwerte und/oder Messgenauigkeiten berücksichtigt werden.

Eine mögliche Entscheidungsregel ist zum Beispiel, diejenige Vermessungsparametereinstellung auszuwählen, mit der sich eine minimale Messdauer bei einer noch akzeptablen Reproduzierbarkeit erreichen lässt, zum Beispiel bei der die Reproduzierbarkeit noch oberhalb eines unzulässigen Schwellenwerts liegt. Zusätzlich könnte auch das Einhalten einer gewünschten Messgenauigkeit als Bedingung definiert werden. Auf diese Weise kann ein geeigneter Kompromiss zwischen einer gewünschten reduzierten Messdauer und der erforderlichen Reproduzierbarkeit erzielt werden.

Bei einer Weiterbildung des Verfahrens und der Anordnung wird in Schritt a) überprüft, ob für die festgelegte Einstellung des Vermessungsparameters bereits ein Wert für das Prüfmerkmal und/oder die die Reproduzierbarkeit beschreibende Größe hinterlegt ist, und wenn dies der Fall ist, werden die mehrfachen Vermessungen und der Schritt b) übersprungen bzw. ausgelassen. Stattdessen kann unmittelbar mit dem Schritt c) fortgesetzt werden. Es kann also allgemein vorgesehen sein, Datensätze bezüglich Vermessungsparametereinstellungen und dabei erhaltenen Prüfmerkmalswerten und/oder der Reproduzierbarkeits-Größe aufzuzeichnen und insbesondere auch für mehrere zeitlich versetzte Durchführungen des Verfahrens aufzuzeichnen (beispielsweise für eine Mehrzahl von Durchführungen des Verfahrens mit einem Koordinatenmessgerät, auch wenn hierbei unterschiedliche Werkstücke vermessen werden).

Die Datensätze können auch Informationen darüber enthalten, welches Werkstück bzw. welches Prüfelement hiervon unter Erhalten der Prüfmerkmalswerte vermessen wurde. Möchte ein Bediener das Verfahren dann für ein neues Werkstück durchführen, kann automatisch überprüft werden, ob das Werkstück einem bereits vermessenen Werkstück ähnelt oder ob zumindest ein darin enthaltenes Prüfmerkmal einem bereits vermessenen Prüfmerkmal ähnelt (zum Beispiel eine Bohrung mit gleichem Soll-Durchmesser). Dabei wird vorzugsweise berücksichtigt, ob das Werkstück aus einem vergleichbaren Material gefertigt ist, wie das bereits vermessene Werkstück. Wird eine Übereinstimmung ermittelt und soll im Rahmen des Verfahrens eine gleiche Vermessungsparametereinstellung angewandt werden, kann dann, anstatt eine Vermessung mit dieser Vermessungsparametereinstellung tatsächlich durchzuführen, ein Prüfmerkmalswert und/oder ein Wert der Reproduzierbarkeits-Größe aus den hinterlegten Datensätzen ausgelesen werden. Hierdurch wird die Gesamtverfahrensdauer reduziert.

Gemäß einer weiteren Ausführungsform des Verfahrens und der Anordnung wird anhand der die Reproduzierbarkeit beschreibenden Größen eine Einstellung des Vermessungsparameters für das Vermessen weiterer (insbesondere vergleichbarer, artgleicher oder baugleicher) Werkstücke ermittelt. Insbesondere kann diejenige Einstellung, die im Folgenden auch als geeignete Einstellung bezeichnet wird, ermittelt werden, mit der sich die höchste Reproduzierbarkeit erreichen lässt. Alternativ kann gemäß vorstehend erläuterten Entscheidungsträgern oder Gewichtungen und unter optionaler Berücksichtigung eines Messdauerwerts und/oder einer erzielbaren Messgenauigkeit eine entsprechende Auswahl getroffen werden.

Die gewählte Einstellung kann in einer Steuerung des Koordinatenmessgeräts und insbesondere der nachstehend erläuterten Steuereinrichtung hinterlegt werden. Insbesondere kann die Einstellung in einem Prüfplan für die Werkstückserie hinterlegt werden, in dem zu vermessene Eigenschaften (zum Beispiel Prüfmerkmale) sowie zu wählende Einstellungen der Vermessungsparameter hinterlegt sind. Nach Maßgabe dieses Prüfplans können dann weitere Werkstücke vermessen werden. Der Prüfplan kann Programmanweisungen umfassen (oder Informationen, aus denen solche ableitbar sind), die zum Betreiben des Koordinatenmessgerätes und insbesondere zum Erzeugen von Steuerbefehlen für das Koordinatenmessgerät verwendbar sind. Anders ausgedrückt kann der Prüfplan ein digitaler Prüfplan sein. Insbesondere kann der Prüfplan ein Betriebsprogramm für das Koordinatenmessgerät für die Werkstückvermessung umfassen oder definieren.

In diesem Zusammenhang können das Verfahren und die Anordnung ferner vorsehen, dass wenigstens ein weiteres Werkstück mit der ermittelten Einstellung des Vermessungsparameters vermessen wird. Hierfür kann das Koordinatenmessgerät mittels eines Prüfplans betrieben werden, in dem die ermittelte Einstellung hinterlegt ist.

Die Erfindung betrifft ferner eine Anordnung zur Werkstückvermessung, mit einem Koordinatenmessgerät, das dazu eingerichtet ist, ein Werkstück nach Maßgabe wenigstens eines einstellbaren Vermessungsparameters zu vermessen, und mit einer Steuereinrichtung, die dazu eingerichtet ist, die folgenden Maßnahmen automatisiert auszuführen:
a) Ansteuern des Koordinatenmessgeräts zum mehrfachen Vermessen eines Werkstücks mit einer festgelegten Einstellung des Vermessungsparameters, wobei räumliche Koordinaten von Messpunkten an der Werkstückoberfläche bestimmt werden;
b) Berechnen eines Werts einer Größe, die eine Reproduzierbarkeit von mit den Vermessungen aus a) ermittelten Vermessungsergebnissen beschreibt;
c) Verändern der Einstellung des Vermessungsparameters und erneutes Durchführen von a) und b).

Insbesondere kann die Anordnung ausgestaltet sein, dass in dieser Beschreibung beschriebenen Verfahren in einer seiner Ausgestaltungen auszuführen.

Die Steuereinrichtung kann baulich in das Koordinatenmessgerät integriert sein und/oder von einer Steuereinrichtung des Koordinatenmessgerätes umfasst sein. Alternativ kann die Steuereinrichtung separat und zum Beispiel räumlich getrennt oder separat handhabbar von dem Koordinatenmessgerät bereitgestellt sein. Beispielsweise in Form eines PCs, der mit dem Koordinatenmessgerät über eine Datenleitung verbunden ist.

Das Ansteuern kann das Erzeugen von Bewegungssignalen für die Achsen des Koordinatenmessgeräts umfassen oder das Übermitteln von Informationen, auf deren Basis entsprechende Bewegungssignale erzeugbar sind.

Die Steuereinrichtung kann zumindest eine der folgenden Einrichtungen aufweisen:
- eine Festlegungseinrichtung, die ausgestaltet ist, eine Einstellung für wenigstens einen Vermessungsparameter festzulegen;
- eine Vermessungseinrichtung, die ausgestaltet ist, das Werkstück unter Anwenden des Vermessungsparameters zu vermessen;
- eine Ermittlungseinrichtung, die ausgestaltet ist, den Wert des wenigstens einen vorbestimmten Prüfmerkmals basierend auf dem Vermessen zu ermitteln;
- eine Berechnungseinrichtung, die ausgestaltet ist, den Wert der die Reproduzierbarkeit beschreibenden Größe zu berechnen,
- eine Veränderungseinrichtung, die ausgestaltet ist, den Wert des Vermessungsparameters zu verändern.

Ferner ist die Steuereinrichtung insbesondere dazu ausgestaltet, den Ablauf der hierin geschilderten Maßnahmen oder allgemein den Betrieb des Koordinatenmessgeräts zu steuern.

Die Anordnung kann jegliche Weiterbildung und jegliches weitere Merkmal umfassen, um sämtliche der vorstehenden oder nachstehenden Schritte, Betriebszustände und Funktionen bereitzustellen oder auszuführen. Insbesondere kann die Anordnung dazu eingerichtet sein, ein Verfahren gemäß jeglichem der vorstehenden oder nachstehenden Aspekte auszuführen.

Im Folgenden wird eine Ausführungsform der Erfindung anhand der beigefügten schematischen Figuren erläutert. In Ihrer Art und/oder Funktion übereinstimmende Merkmale können dabei figurenübergreifend mit den gleichen Bezugszeichen versehen sein. Es stellen dar:
- Fig. 1:: eine Ansicht einer erfindungsgemäßen Anordnung, mit der erfindungsgemäße Verfahren ausführbar sind;
- Fig. 2:: ein Ablaufschema eines Verfahrens gemäß einem Ausführungsbeispiel; und
- Fig. 3:: eine tabellarische Übersicht zum Erläutern des Verfahrens aus Figur 2.

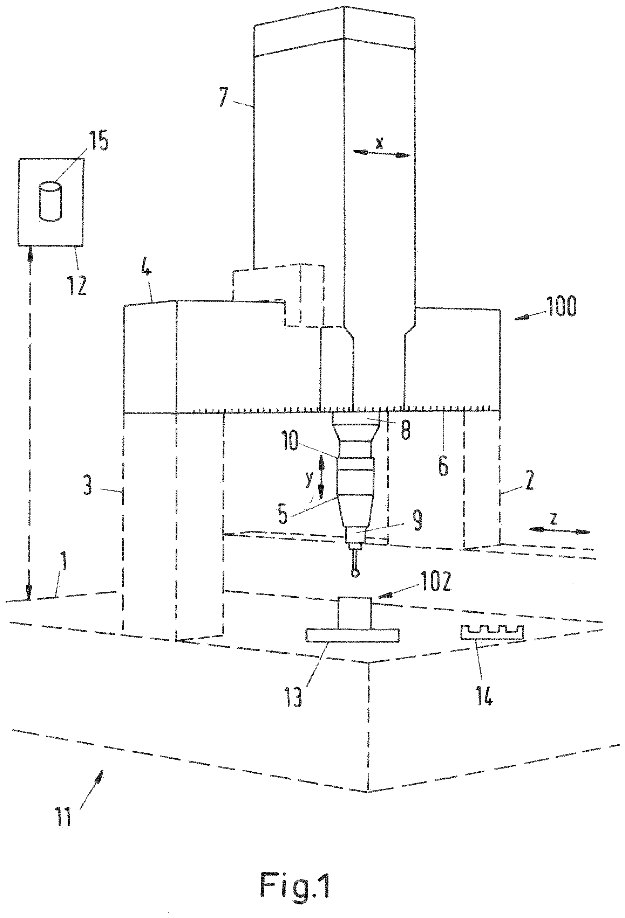

Die in Fig. 1 dargestellte Anordnung 11 umfasst ein Koordinatenmessgerät (KMG) 100 in Portalbauweise, das einen Messtisch 1 aufweist, über dem Säulen 2, 3 verfahrbar sind, die zusammen mit einem Querträger 4 ein Portal des KMG 100 bilden. Der Querträger 4 ist an seinen gegenüberliegenden Enden mit den Säulen 2 bzw. 3 verbunden, die auf dem Messtisch 1 längsverschieblich gelagert sind.

Der Querträger 4 ist mit einem Querschlitten 7 kombiniert, welcher luftgelagert entlang dem Querträger 4 (in X-Richtung) beweglich ist. Die momentane Position des Querschlittens 7 relativ zu dem Querträger 4 kann anhand einer Maßstabsteilung 6 festgestellt werden. An dem Querschlitten 7 ist eine in vertikaler Richtung bewegliche Pinole 8 gelagert, die an ihrem unteren Ende über eine Montageeinrichtung 10 mit einer Sensoreinrichtung 5 verbunden ist. An der Sensoreinrichtung 5 ist ein taktil abtastender Tastkopf 9 abnehmbar angeordnet. Anstelle des Tastkopfs 9 könnte die Sensoreinrichtung 5 ebenso einen berührungslos abtastenden Sensor umfassen, insbesondere einen Lasersensor.

Auf dem Messtisch 1 ist ein zusätzlicher drehbarer Messtisch 13 angeordnet, auf dem ein Messobjekt angeordnet werden kann, welches durch Drehung des Messtisches 13 um eine vertikale Drehachse gedreht werden kann. Ferner ist auf dem Messtisch 1 ein Magazin 14 angeordnet, in dem verschiedene Tastköpfe angeordnet werden können, die gegen den Tastkopf 9 ausgetauscht werden können, oder in dem verschiedene Taststifte angeordnet werden können, die gegen den von dem Tastkopf 9 getragenen Taststift ausgetauscht werden können.

Ferner zeigt Fig. 1 schematisch eine Steuereinrichtung12 des KMG 100, die beispielsweise durch einen Computer realisiert werden kann, der über Software und zumindest einen Datenspeicher 15 verfügt und der über Signal- und Steuerleitungen mit ansteuerbaren Komponenten des Koordinatenmessgerätes 100 verbunden ist, insbesondere mit Antrieben. Außerdem ist die Steuereinrichtung 12 über eine Messdatenverbindung mit denjenigen Elementen des KMG 100 verbunden, die zur Ermittlung der Koordinatenmesswerte eingesetzt werden. Da derartige Elemente und Einrichtungen auf dem Gebiet von Koordinatenmessgeräten 100 allgemein bekannt sind, wird hier nicht näher darauf eingegangen.

Einstellung für Vermessungsparameter, welche z.B. für das Vermessen baugleicher Werkstücke 102 festgelegt werden, können lokal in dem Datenspeicher 15 des KMG 100 abgespeichert werden oder allgemein in einem dort abgelegten Prüfplan. Letzterer kann Programmanweisungen enthalten, die das KMG 100 bei einem Ausführen des Prüfplans auf der Steuereinrichtung 12 dazu veranlassen, ein Werkstück 102 gemäß den im Prüfplan definierten Vermessungsparametereinstellungen zu vermessen.

Zusätzlich kann ein Protokoll über die Parametermittelung erstellt werden, auf dessen Basis ein Anwender weitere Informationen erhalten kann und/oder eine Datenbank erstellt werden kann. In diesem Zusammenhang können insbesondere im allgemeinen Beschreibungsteil geschilderte Datensätze erstellt werden, bei denen zumindest ein Vermessungsparameterwert und ein dazugehöriger Prüfmerkmalswert abgespeichert sind und vorzugsweise auch Informationen über das dazugehörige vermessene Prüfmerkmal (oder auch -element) und/oder Werkstück 102 (zum Beispiel Dimensions- und/oder Materialinformationen). Somit kann ermittelt werden, ob für ein gegebenes Werkstück 102 bzw. Prüfelement sowie eine Einstellung des Vermessungsparameters bereits Prüfmerkmalswerte hinterlegt sind und können diese hinterlegten Werte verwendet werden, anstatt mit dieser Vermessungsparametereinstellung erneut eine vollständige Werkstückvermessung durchzuführen. Dies reduziert die Verfahrensdauer.

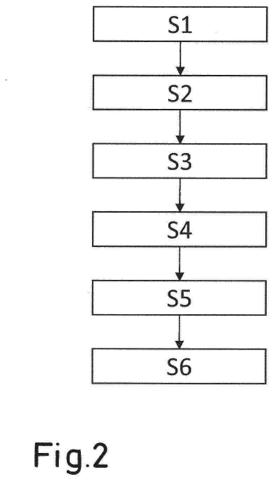

Bezugnehmend auf Figur 2 wird im Folgenden ein Ablauf eines erfindungsgemäßen Verfahrens erläutert, wie es mit der Anordnung 11 aus Figur 1 ausführbar ist.

In einem Schritt S1 wird ein Werkstück 102 im Arbeitsraum des KMG 100 positioniert und das KMG 100 bzw. dessen Steuereinrichtung 12 erhält Informationen über das Werkstück 102, insbesondere über dessen Abmessungen, dessen Werkstoff und/oder dessen Oberflächenbeschaffenheit. Die Informationen können auch zu vermessene Prüfmerkmale des Werkstücks 102 angeben. Anschließend ermittelt die Steuereinrichtung 12 eine geeignete initiale Einstellung für wenigstens einen festzulegenden Vermessungsparameter.

Die Steuereinrichtung 12 kann selbst bestimmen, welche Vermessungsparameter für das gegebene Werkstück 102 festgelegt werden müssen und gemäß dem hierin geschilderten Verfahren hinsichtlich der geeigneten Einstellung überprüft werden sollen. Alternativ kann ein Bediener den oder die zu überprüfenden Vermessungsparameter vorgeben. Auch Mischformen sind möglich, bei denen ein Bediener einzelne zu überprüfende Vermessungsparameter vorgibt und andere von der Steuereinrichtung 12 ausgewählt werden.

Andere Vorgaben, die entweder von der Steuereinrichtung 12, einem Bediener oder im Sinne einer vorstehend erläuterten Mischform von beiden festgelegt werden können, betreffen die Anzahl an Wiederholungen beim nachstehend erläuterten mehrfachen Vermessen des Werkstücks 102 mit einer festgelegten Vermessungsparametereinstellung, das Festlegen einer initialen Einstellung für den Vermessungsparameter, die Anzahl an Verfahrensdurchläufen (d. h. die Anzahl an Veränderungen von Vermessungsparametereinstellungen, mit denen anschließend das Werkstück 102 mehrfach vermessen wird) und die Art der Veränderungen (zum Beispiel das Ausmaß hiervon, ob der Vermessungsparameter erhöht oder verringert werden soll etc.).

Die vorstehend erläuterten Möglichkeiten zum Festlegen von Verfahrenseigenschaften durch entweder die Steuereinrichtung 12 oder einen Bediener (oder auch Mischformen hiervon) sind nicht auf das vorliegende Ausführungsbeispiel beschränkt, sondern bilden allgemeine Aspekte der Erfindung, die einzeln oder in beliebiger Kombination auch unabhängig von den weiteren Details des Ausführungsbeispiels beansprucht werden können.

In einem Schritt S2 wird das Werkstück 102 mit dem Koordinatenmessgerät 100 unter Steuerung durch die Steuereinrichtung 12 mehrfach vermessen, beispielsweise wenigstens drei-, wenigstens fünf- oder wenigstens zehnmal. Das Vermessen erfolgt hinsichtlich wenigstens eines Prüfmerkmals des Werkstücks 102 (zum Beispiel eines Durchmessers von einem vorbestimmten Prüfelement des Werkstücks 102, wobei das Prüfelement zum Beispiel eine Bohrung oder Durchmesserstufe sein kann). Als Vermessungsergebnis für eine jede Wiederholung bzw. einen jeweiligen Vermessungsdurchlauf wird der jeweils ermittelte Wert des Prüfmerkmals hinterlegt.

Im Ergebnis liegen somit nach Durchführen von Schritt S2 eine Mehrzahl von Prüfmerkmalswerten vor, die in dem Datenspeicher 15 hinterlegt sind.

In einem Schritt S3 berechnet die Steuereinrichtung 12 anhand dieser hinterlegten Werte eine die Reproduzierbarkeit der Werkstückvermessung mit der initialen Vermessungsparametereinstellung repräsentierenden Größe (Reproduzierbarkeits-Größe). In dem gezeigten Beispiel wird als Reproduzierbarkeits-Größe die Spannweite ermittelt, also die Differenz zwischen dem maximalen und dem minimalen Prüfmerkmalswert, die mit der gewählten Einstellung erhalten werden.

Im Ergebnis liegt somit nach Durchführen von Schritt S3 für die spezifische Einstellung ein Wert einer dazugehörigen Reproduzierbarkeits-Größe vor, die in dem Datenspeicher 15 hinterlegt ist. Es versteht sich, dass im Fall einer Mehrzahl von betrachteten Vermessungsparametern für jeden Vermessungsparameter und dazugehörige Einstellung ein Wert für eine entsprechende Reproduzierbarkeits-Größe ermittelt werden kann.

In einem Schritt S4 wird die Einstellung des Vermessungsparameters geändert und die Schritte S2 und S3 werden mit bzw. bezogen auf die veränderte Einstellung erneut durchgeführt.

Im Ergebnis liegen nach Durchführen von Schritt S4 somit für wenigstens zwei Einstellungen des Vermessungsparameters jeweils eine dazugehörige Reproduzierbarkeit-Größe vor oder im Fall einer Mehrzahl von Vermessungsparametern zwei Reproduzierbarkeits-Größen je Vermessungsparameter.

Die Schritte S2-S4 können beliebig oft wiederholt werden, je nachdem wie oft die Einstellung verändert werden soll.

In einem Schritt S5 wird dann aus der Mehrzahl der Einstellungen und dazugehöriger Reproduzierbarkeits-Größen eine Vermessungsparametereinstellung ausgewählt, die für das Vermessen weiterer baugleicher Werkstücke 102 verwendet werden soll. Diese Einstellung wird in einem Prüfplan abgespeichert, der für das zukünftige Betreiben des KMG 100 für eine entsprechende Werkstückvermessung verwendet wird. Bei der Auswahl einer geeigneten Einstellung können auch vorstehend und nachstehend erläuterte Messdauerwerte und/oder erzielbaren Messgenauigkeiten berücksichtigt werden.

In einem Schritt S6 vermisst das KMG 100 mittels dieses Prüfplans ein weiteres (baugleiches) Werkstück 102, dass zwischenzeitlich in das KMG 100 eingelegt wurde.

Zu betonen ist, dass sämtliche der vorstehend erläuterten Schritte automatisiert und unter Kontrolle der Steuereinrichtung 12 ausgeführt werden können. Einzig das Auswechseln der Werkstücke 102 kann mittels einer anderen Vorrichtung oder auch manuell erfolgen.

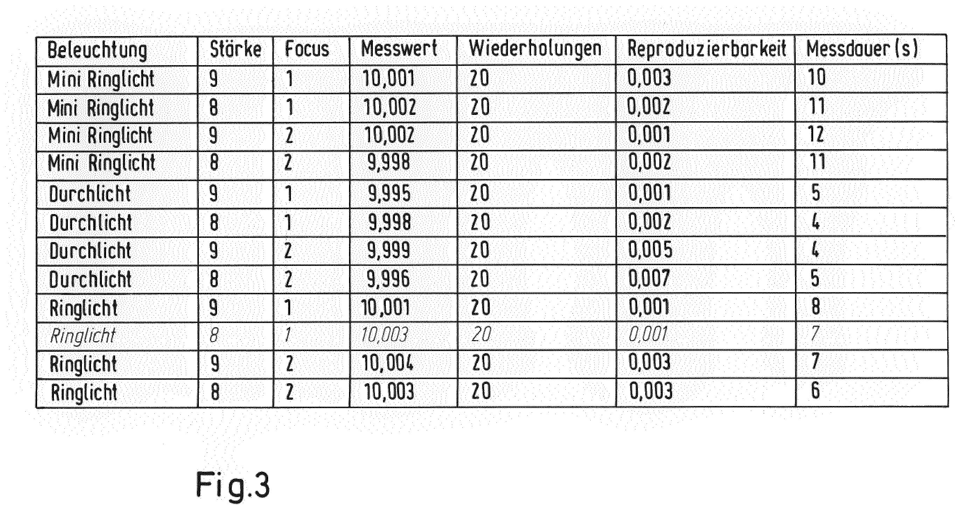

Im Folgenden wird das erfindungsgemäße Verfahren aus Figur 2 anhand von Figur 3 näher erläutert. In Figur 3 ist eine Tabelle gezeigt, in der die beim Durchführen des erfindungsgemäßen Verfahrens variierten Vermessungsparametereinstellungen, die gemessenen Prüfmerkmalswerte (Messwerte) sowie daraus abgeleitete Reproduzierbarkeit-Größen eingetragen sind.

Bei diesem Beispiel soll der Durchmesser einer Bohrung des Werkstücks 102 optisch vermessen werden. Die Vermessungsparameter sind die Beleuchtungsart (Eistellmöglichkeiten: Mini Ringlicht, Durchlicht, Ringlicht), die Beleuchtungsstärke (angegeben als eine Stufeneinstellung von beispielsweise 8 oder 9) und eine Fokuseinstellung (angegeben als eine Stufeneinstellung von beispielsweise 1 oder 2).

Jede Tabellenzeile enthält eine Kombination von Einstellungen dieser Vermessungsparameter. Mit diesen Einstellungen wird ein Werkstück 102 mehrfach vermessen, nämlich zwanzigmal (siehe Spalte: Wiederholungen). Anschließend wird wenigstens eine der Einstellungen verändert und wird eine neue wiederholte Werkstückvermessung durchgeführt.

In jeder Zeile ist ferner der für die Kombination von Vermessungsparametereinstellungen dazugehörige durchschnittliche Prüfmerkmalswert (Messwert) eingetragen. Wie geschildert, wird nämlich mit jeder Kombination von entsprechenden Einstellungen das Werkstück 102 mehrfach vermessen und zwar hinsichtlich des Prüfmerkmals Durchmesser. Anschließend wird aus der Mehrzahl der ermittelten Prüfmerkmalswerte der Durchschnitt gebildet, was einem jeweiligen Messwert aus der Tabelle entspricht. Dieser Messwert kann verwendet werden, um auf eine erzielbare Messgenauigkeit zu schließen. Letztere ist als Differenz des eingetragenen durchschnittlichen Messwerts von einem Soll-Messwert definiert, der in dem gezeigten Beispiel den Wert 10,0 aufweist. Diese Differenz ist nicht noch einmal gesondert in der Tabelle eingetragen, ergibt sich jedoch ohne Weiteres aus der Werten in der Messwert-Spalte.

Weiter ist für jede Tabellenzeile die Reproduzierbarkeits-Größe eingetragen, welche als Spannweite der im Rahmen von zwanzig Wiederholungen je Vermessungsparametersatz ermittelten Messwerte definiert ist. Unter einem Vermessungsparametersatz kann dabei eine Kombination von Vermessungsparametereinstellungen verstanden werden, wie sie in der Tabelle von Figur 3 durch eine einzelne Tabellenzeile definiert sind. Die Spannweite ist als Differenz des maximalen und minimalen Prüfmerkmalswerts definiert, welche im Rahmen der Wiederholungen je Vermessungsparametersatz ermittelt werden.

Die Wiederholungen für jede Zeile der Tabelle aus Figur 3 entsprechen dabei den Wiederholungen der Schritte b) oder auch S2 aus Figur 2, also einer zwanzigfach wiederholten Werkstückvermessung und Prüfmerkmalswertermittlung mit den gleichen Vermessungsparametereinstellungen.

Weiter ist in Figur 3 ein Messdauerwert in Form der durchschnittlichen Messdauer je Vermessungsparametersatz eingetragen. Diese wird wiederum als Durchschnitt aus den einzelnen Messdauern je wiederholter Werkstückvermessung berechnet. Alternativ kann auch die maximale Messdauer gewählt werden, die im Rahmen der Wiederholungen aufgetreten ist.

Nach Durchführen der zwanzig Wiederholungen wird überprüft, ob noch weitere Vermessungsparameter-Veränderungen erforderlich sind, beispielsweise um sämtliche Kombinationen von Vermessungsparametereinstellungen abzudecken oder um ein Abbruchkriterium zu erfüllen. Letzteres kann eine Minimalanzahl von Durchläufen mit unterschiedlichen Vermessungsparametereinstellungen oder eine zu Erzielende einer Soll-Reproduzierbarkeit betreffen (d. h. ist die Soll-Reproduzierbarkeit erfüllt, können die dazugehörigen Vermessungsparametereinstellungen als geeignet bewertet werden und keine weiteren Veränderungen und Durchläufe sind erforderlich).

Sind noch weitere Vermessungsparameter-Veränderungen erforderlich, wird zumindest eine der Vermessungsparametereinstellungen verändert und es wird mit dem neuen Vermessungsparametersatz eine neue Vermessung mit zwanzig Wiederholungen durchgeführt. Anders ausgedrückt wird in Figur 3 zu der nächsten Tabellenzeile gewechselt. Dies wird so oft wiederholt, bis ein vorstehend erläutertes Abbruchkriterium erfüllt ist.

In dem gezeigten Beispiel ist als Abbruchkriterium eine Mindestanzahl von Vermessungsparameter-Veränderungen definiert. Sobald diese durchlaufen sind, können aus den insgesamt gewonnenen Ergebnissen, wie sie in der Tabelle aus Figur 3 eingetragen sind, geeignete Vermessungsparameter-Einstellungen ausgewählt werden. Hierfür können diejenigen Vermessungsparameter-Einstellungen (oder derjenige Vermessungsparametersatz) ausgewählt werden, mit dem sich eine gewünschte Kombination der Reproduzierbarkeit-Größe, der Messdauer und optional auch der Messgenauigkeit erzielen lässt. In dem gezeigten Beispiel kann dies beispielsweise eine Kombination betreffen, bei der die Messdauer minimal ist, die Messgenauigkeit einer Abweichung von weniger als 0,004 vom gewünschten Sollwert (10,0) entspricht, und die Reproduzierbarkeit unterhalb eines Werts von 0,002 liegt. Im Fall von Figur 3 wird deshalb lediglich beispielhaft die dritte Zeile von unten und nicht die fünfte Zeile von oben als Empfehlung identifiziert (siehe entsprechend kursiv markierte Zeile in Figur 3), da Letztere eine Abweichung von 0,005 aufweist. Die vorstehend genannten Kriterien, anhand derer die Kombination ausgewählt wird, können benutzerdefiniert sein oder automatisch festgelegt werden, beispielsweise anhand der hinterlegten Werkstückinformationen.

Es ist auch möglich, Einstellungen als geeignet zu identifizieren, die im Rahmen des Verfahrens tatsächlich nicht eingestellt wurden und mit denen keine tatsächliche Werkstückmessung durchgeführt wurde. Beispielsweise können geeignete Werte von Vermessungsparametern per Interpolation berechnet werden, um eine gewünschte Reproduzierbarkeit zu erreichen.

## Patentansprüche

1. Verfahren zum Überprüfen von Vermessungsparametereinstellungen für den Betrieb eines Koordinatenmessgeräts (100),
wobei das Koordinatenmessgerät (100) dazu eingerichtet ist, ein Werkstück (102) nach Maßgabe wenigstens eines einstellbaren Vermessungsparameters zu vermessen,
und wobei das Verfahren automatisiert durchgeführt wird und umfasst:
a) mehrfaches Vermessen (S2) eines Werkstücks (102) mit dem Koordinatenmessgerät (100) und mit einer festgelegten Einstellung des Vermessungsparameters, wobei räumliche Koordinaten von Messpunkten an der Werkstückoberfläche bestimmt werden;
b) Berechnen (S3) eines Werts einer Größe, die eine Reproduzierbarkeit von mit den Vermessungen aus a) ermittelten Vermessungsergebnissen beschreibt;
c) Verändern (S4) der Einstellung des Vermessungsparameters und erneutes Durchführen von a) und b).

2. Verfahren nach Anspruch 1,
ferner umfassend:
- Ermitteln eines Werts von wenigstens einem vorbestimmten Prüfmerkmal bei jeder Vermessung in a).

3. Verfahren nach Anspruch 2,
wobei die eine Reproduzierbarkeit beschreibende Größe anhand der ermittelten Werte des Prüfmerkmals ermittelt wird.

4. Verfahren nach einem der vorangehenden Ansprüche,
wobei die Maßnahme c) im Rahmen des Verfahrens wenigstens zweimal durchgeführt wird.

5. Verfahren nach einem der vorangehenden Ansprüche,
ferner umfassend:
- Ermitteln eines Messdauerwerts für das Vermessen des Werkstücks (102) mit einer jeweiligen Einstellung des Vermessungsparameters.

6. Verfahren nach einem der vorangehenden Ansprüche,
ferner umfassend:
- Ermitteln einer Messgenauigkeit für das Vermessen des Werkstücks (102) mit einer jeweiligen Einstellung des Vermessungsparameters.

7. Verfahren nach einem der vorangehenden Ansprüche,
ferner umfassend:
- Ermitteln (S5) einer Einstellung des Vermessungsparameters für das Vermessen weiterer Werkstücke (102) anhand der die Reproduzierbarkeit beschreibenden Größen.

8. Verfahren nach Anspruch 7,
ferner umfassend:
- Vermessen (S6) von wenigstens einem weiteren Werkstück (102) mit der ermittelten Einstellung des Vermessungsparameters.

9. Anordnung (11) zur Werkstückvermessung,
mit einem Koordinatenmessgerät (100), das dazu eingerichtet ist, ein Werkstück (102) nach Maßgabe wenigstens eines einstellbaren Vermessungsparameters zu vermessen, und mit einer Steuereinrichtung (12), die dazu eingerichtet ist, die folgenden Maßnahmen automatisiert auszuführen:
a) Ansteuern des Koordinatenmessgeräts (100) zum mehrfachen Vermessen eines Werkstücks (102) mit einer festgelegten Einstellung des Vermessungsparameters, wobei räumliche Koordinaten von Messpunkten an der Werkstückoberfläche bestimmt werden;
b) Berechnen eines Werts einer Größe, die eine Reproduzierbarkeit von mit den Vermessungen aus a) ermittelten Vermessungsergebnissen beschreibt;
c) Verändern der Einstellung des Vermessungsparameters und erneutes Durchführen von a) und b).

## Claims

1. Method for checking measurement parameter settings for the operation of a coordinate measuring machine (100),
wherein the coordinate measuring machine (100) is configured to measure a workpiece (102) in accordance with at least one settable measurement parameter,
and wherein the method is carried out in an automated manner and comprises:
a) repeatedly measuring (S2) a workpiece (102) using the coordinate measuring machine (100) and with a defined setting of the measurement parameter, wherein spatial coordinates of measurement points on the workpiece surface are determined;
b) calculating (S3) a value of a variable which describes a reproducibility of measurement results determined with the measurements from a) ;
c) changing (S4) the setting of the measurement parameter and carrying out a) and b) again.

2. Method according to Claim 1,
further comprising:
- determining a value of at least one predetermined test feature during each measurement in a).

3. Method according to Claim 2,
wherein the variable describing a reproducibility is determined on the basis of the determined values of the test feature.

4. Method according to one of the preceding claims, wherein measure c) is carried out at least twice as part of the method.

5. Method according to one of the preceding claims, further comprising:
- determining a measurement duration value for measuring the workpiece (102) with a respective setting of the measurement parameter.

6. Method according to one of the preceding claims, further comprising:
- determining a measurement accuracy for measuring the workpiece (102) with a respective setting of the measurement parameter.

7. Method according to one of the preceding claims, further comprising:
- determining (S5) a setting of the measurement parameter for measuring further workpieces (102) on the basis of the variables describing the reproducibility.

8. Method according to Claim 7,
further comprising:
- measuring (S6) at least one further workpiece (102) with the determined setting of the measurement parameter.

9. Arrangement (11) for measuring workpieces,
having a coordinate measuring machine (100), which is configured to measure a workpiece (102) in accordance with at least one settable measurement parameter, and having a control device (12), which is configured to carry out the following measures in an automated manner:
a) controlling the coordinate measuring machine (100) for multiple measurements of a workpiece (102) with a defined setting of the measurement parameter, wherein spatial coordinates of measurement points on the workpiece surface are determined;
b) calculating a value of a variable which describes a reproducibility of measurement results determined with the measurements from a);
c) changing the setting of the measurement parameter and carrying out a) and b) again.

## Revendications

1. Procédé permettant de vérifier des réglages de paramètres de mesure pour le fonctionnement d'un appareil de mesure de coordonnées (100),
l'appareil de mesure de coordonnées (100) étant aménagé pour mesurer une pièce à travailler (102) conformément à au moins un paramètre de mesure réglable, et le procédé étant effectué de manière automatisée et comprenant les étapes consistant à :
a) mesurer (S2) à plusieurs reprises une pièce à travailler (102) par l'appareil de mesure de coordonnées (100) et avec un réglage défini du paramètre de mesure, des coordonnées spatiales de points de mesure étant déterminées sur la surface de pièce à travailler ;
b) calculer (S3) une valeur d'une grandeur qui décrit une reproductibilité de résultats de mesure établis par les mesures de l'étape a) ;
c) modifier (S4) le réglage du paramètre de mesure et effectuer à nouveau les étapes a) et b).

2. Procédé selon la revendication 1, comprenant en outre l'étape consistant à :
- établir une valeur d'au moins une particularité de vérification prédéterminée à chaque mesure à l'étape a) .

3. Procédé selon la revendication 2, dans lequel la grandeur décrivant une reproductibilité est établie à l'aide des valeurs établies de la particularité de vérification.

4. Procédé selon l'une quelconque des revendications précédentes, dans lequel l'action c) est effectuée au moins deux fois dans le cadre du procédé.

5. Procédé selon l'une quelconque des revendications précédentes, comprenant en outre l'étape consistant à :
- établir une valeur de durée de mesure pour la mesure de la pièce à travailler (102) avec un réglage respectif du paramètre de mesure.

6. Procédé selon l'une quelconque des revendications précédentes, comprenant en outre l'étape consistant à :
- établir une précision de mesure pour la mesure de la pièce à travailler (102) avec un réglage respectif du paramètre de mesure.

7. Procédé selon l'une quelconque des revendications précédentes, comprenant en outre l'étape consistant à :
- établir (S5) un réglage du paramètre de mesure pour la mesure d'autres pièces à travailler (102) à l'aide des grandeurs décrivant la reproductibilité.

8. Procédé selon la revendication 7, comprenant en outre l'étape consistant à :
- mesurer (S6) au moins une autre pièce à travailler (102) avec le réglage établi du paramètre de mesure.

9. Agencement (11) pour mesurer des pièces à travailler, comprenant un appareil de mesure de coordonnées (100) qui est aménagé pour mesurer une pièce à travailler (102) conformément à au moins un paramètre de mesure réglable, et un dispositif de commande (12) qui est aménagé pour effectuer de manière automatisée les actions suivantes :
a) piloter l'appareil de mesure de coordonnées (100) pour des mesures multiples d'une pièce à travailler (102) avec un réglage défini du paramètre de mesure, des coordonnées spatiales de points de mesure étant déterminées sur la surface de pièce à travailler ;
b) calculer une valeur d'une grandeur qui décrit une reproductibilité de résultats de mesure établis avec les mesures de l'étape a) ;
c) modifier le réglage du paramètre de mesure et effectuer une nouvelle fois les étapes a) et b).
